# EUROPÄISCHE PATENTANMELDUNG

(11) **EP 3 993 151 A2**
(43) Veröffentlichungstag der Anmeldung: **04.05.2022**
(21) Anmeldenummer: 21201188.6
(22) Anmeldetag: 06.10.2021
(51) Int. Cl.: H01M 50/503, H01M 50/507, H01M 50/509, H01M 50/516

(54) **BATTERIE**

(30) Priorität: 27.10.2020 DE 102020213480
(71) Anmelder: Robert Bosch GmbH, 70442 Stuttgart (DE)
(72) Erfinder: Mehlo, Dennis, 1049 Taipei (TW); Kunert, Peter, 72805 Lichtenstein (DE); Bayer, Lisa, 70197 Stuttgart (DE)

(57) **Zusammenfassung**

Die vorliegende Erfindung betrifft eine Batterie (10) umfassend einen ersten Zellstack (S1) mit einer Mehrzahl von Batteriezellen (20), einen zweiten Zellstack (S2) mit einer Mehrzahl von Batteriezellen (20), eine Mehrzahl elektrisch leitender Zellverbinder und mindestens einen elektrisch leitenden Stackverbinder, wobei die Batteriezellen (20) innerhalb der jeweiligen Zellstacks (S1, S2) bezüglich ihrer jeweiligen Längserstreckungsrichtung parallel zueinander angeordnet sind, die Zellverbinder an den jeweiligen Kontaktierungsseiten der Zellstacks (S1, S2) angeordnet sind und jeweils wenigstens zwei Batteriezellen (20) pro Kontaktierungsseite elektrisch miteinander verbinden und diese elektrische Verbindung mittels jeweiliger Kontaktfahnen in einem ersten Kontaktierungsabschnitt (50) der Batterie (10) und/oder in einem zweiten Kontaktierungsabschnitt (60) der Batterie (10) bereitstellen, wobei der mindestens eine Stackverbinder einlagig ausgebildet ist und eingerichtet ist, durch die Kontaktfahnen im ersten Kontaktierungsabschnitt (50) bereitgestellten Spannungen elektrisch verbundener Batteriezellen (20) an einem Leistungsanschluss (70) der Batterie (10) zu einer Gesamtspannung der Batterie (10) zusammenzuführen und wobei zum Bereitstellen der Gesamtspannung im ersten Kontaktierungsabschnitt (50) wenigstens zwei benachbarte Kontaktfahnen des ersten Zellstacks (S1) und des zweiten Zellstacks (S2) im zweiten Kontaktierungsabschnitt (60) elektrisch miteinander verbunden sind.

## Beschreibung

### Stand der Technik

Die vorliegende Erfindung betrifft eine Batterie, insbesondere eine Batterie für ein elektrisch angetriebenes Fortbewegungsmittel.

Aus dem Stand der Technik sind elektrisch angetriebene Zweiräder und insbesondere Elektrofahrräder, auch E-Bikes genannt, bekannt, welche als Energiequelle für den elektrischen Antrieb Batterien einsetzen, die sich aus einer Mehrzahl von Batteriestacks umfassend eine Mehrzahl von Batteriezellen zusammensetzen. Es ist außerdem bekannt, die einzelnen Batteriezellen derart innerhalb der Batteriestacks anzuordnen, dass diese durch eine platzsparende Anordnung in ein rohrförmiges Gehäuse eingebracht werden können, welches beispielsweise an einem Rahmen solcher Zweiräder angebracht werden kann. Eine solche Bauform für Batterien elektrisch angetriebener Zweiräder ist auch unter der Bezeichnung "Powertube"-Bauform bekannt. Jeweilige Reihen- und Parallelschaltungen von Batteriezellen der Batterie werden meist direkt über elektrisch leitfähige Zellverbinder realisiert, welche an jeweiligen Kontaktierungsbereichen (Polen) der Batteriezellen angeordnet werden. Ein Batteriemanagementsystem (BMS) und ein Anschlussstecker solcher Batterien sind üblicherweise an den Stirnseiten der Batterie (auch "core-pack" genannt) angeordnet. Daher müssen sowohl ein serieller Leistungspfad, welcher über Leitungen und/oder überlappende Kontaktfahnen der Zellverbinder realisiert wird, als auch ein Überwachungspfad für die einzelnen Zellpotentiale, welcher über Kabel oder flexible Leiterplatten realisiert wird, zur Stirnseite geführt werden. Für daraus resultierende Kreuzungspunkte jeweiliger Leitungen, müssen entsprechend spezielle Isolationsmaßnahmen getroffen werden, um einen internen Kurzschluss der Batterie zu vermeiden. Insbesondere bei höheren Batteriekapazitäten können entsprechend viele Kreuzungspunkte entstehen.

### Offenbarung der Erfindung

Die vorliegende Erfindung schlägt eine Batterie vor, welche insbesondere eine Energiequelle für ein elektrisch angetriebenes Fortbewegungsmittel, bevorzugt für ein elektrisch angetriebenes Zweirad und insbesondere bevorzugt für ein elektrisch angetriebenes Fahrrad ist. Darüber hinaus ist es möglich, die erfindungsgemäße Batterie in davon abweichenden Arten von Fortbewegungsmitteln wie beispielsweise E-Rollern oder auch vierrädrigen Elektrofahrzeugen anzuwenden. Die erfindungsgemäße Batterie weist einen ersten Zellstack umfassend eine erste Anordnung von Batteriezellen, einen zweiten Zellstack umfassend eine zweite Anordnung von Batteriezellen, eine Mehrzahl elektrisch leitender Zellverbinder und mindestens einen elektrisch leitenden Stackverbinder auf. Die Batteriezellen sind vorzugsweise in Form von Rundzellen ausgebildet, deren jeweilige elektrische Pole an einander gegenüberliegenden Seiten der Batteriezellen angeordnet sind. Es sei darauf hingewiesen, dass im Zusammenhang mit der erfindungsgemäßen Batterie auch davon abweichende Bauformen der Batteriezellen einsetzbar sind und dass die genannte bevorzugte Bauform nicht als Einschränkung auf diese Bauform anzusehen ist. Die Batteriezellen innerhalb der jeweiligen Zellstacks sind bezüglich ihrer jeweiligen Längserstreckungsrichtung parallel zueinander angeordnet, so dass jeweilige gegenüberliegende elektrische Kontaktierungsbereiche (Pole) der Batteriezellen an einer ersten Kontaktierungsseite und an einer zweiten Kontaktierungsseite der jeweiligen Zellstacks bereitgestellt sind. Ferner sind der erste Zellstack und der zweite Zellstack derart unbeweglich miteinander verbunden, dass eine der Kontaktierungsseiten des ersten Zellstacks einer der Kontaktierungsseiten des zweiten Zellstacks zugewandt ist, wobei jeweilige einander zugewandte Kontaktierungsbereiche der Batteriezellen der jeweiligen Zellstacks voneinander beabstandet sind. Mit anderen Worten, stehen die Kontaktierungsbereiche einander zugewandter Batteriezellen nicht in direktem Kontakt. Der elektrische Kontakt zwischen jeweiligen Batteriezellen innerhalb eines Zellstacks wird durch die vorgenannten Zellverbinder hergestellt, welche an den jeweiligen Kontaktierungsseiten der Zellstacks angeordnet sind und welche jeweils wenigstens zwei Batteriezellen pro Kontaktierungsseite elektrisch miteinander verbinden (parallel und/oder seriell) und diese elektrische Verbindung mittels jeweiliger Kontaktfahnen in einem ersten Kontaktierungsabschnitt der Batterie und/oder in einem vom ersten Kontaktierungsabschnitt abweichenden zweiten Kontaktierungsabschnitt der Batterie bereitstellen. Unter den beiden Kontaktierungsabschnitten sollen insbesondere zellstackübergreifende Abschnitte einer äußeren Fläche der Batterie verstanden werden, in welchen die Kontaktfahnen der jeweiligen Zellverbinder von außen zugänglich angeordnet sind. Darüber hinaus ist der mindestens eine Stackverbinder einlagig ausgebildet (d. h. er weist keine sich überkreuzenden Leiterbahnen auf) und eingerichtet, durch die Kontaktfahnen im ersten Kontaktierungsabschnitt bereitgestellte Spannungen elektrisch verbundener Batteriezellen an einem Leistungsanschluss der Batterie zu einer Gesamtspannung der Batterie zusammenzuführen. Eine Position, an welcher die Gesamtspannung durch den mindestens einen Stackverbinder bereitgestellt wird, ist bevorzugt eine Position an einer der Stirnseiten der Batterie, ohne dadurch auf eine solche Position eingeschränkt zu sein. Für eine solche Zusammenführung der einzelnen Spannungen zu einer Gesamtspannung ist es auch denkbar, dass mehr als ein elektrisch leitender Stackverbinder eingesetzt wird, wobei eine solche Mehrzahl von Stackverbindern in Längserstreckungsrichtung der Batterie hintereinander angeordnet und elektrisch miteinander verbunden ist. Eine Anzahl elektrisch verbundener Stackverbinder ist dabei nicht auf eine bestimmte Anzahl beschränkt, zudem ist es möglich, dass sich die einzelnen Stackverbinder unterschiedlich ausgebildet sind. Zur Erzielung der wesentlichen Vorteile der erfindungsgemäßen Batterie, welche sich insbesondere in einer vereinfachten Herstellung und einer damit einhergehenden Kostenersparnis äußern, ist es von Vorteil, eine Anzahl von Stackverbindern im Hinblick auf eine möglichst geringe Anzahl von Herstellungsschritten und/oder im Hinblick auf ein Gleichteilkonzept (d. h., eine Verwendung einer möglichst geringen Anzahl unterschiedlicher Zellverbinder) festzulegen. Ferner sieht die erfindungsgemäße Batterie zum Bereitstellen der Gesamtspannung im ersten Kontaktierungsabschnitt vor, dass wenigstens zwei benachbarte Kontaktfahnen des ersten Zellstacks und des zweiten Zellstacks im zweiten Kontaktierungsabschnitt elektrisch miteinander verbunden sind. D. h., dass durch eine geeignete Verschaltung jeweiliger Batteriezellen durch jeweilige Zellverbinder und durch eine zumindest teilweise elektrische Kontaktierung der jeweiligen Zellstacks mittels der Kontaktfahnen der Zellverbinder innerhalb des zweiten Kontaktierungsabschnittes erreicht wird, dass im Gegensatz zum Stand der Technik keine Einzelverdrahtungen (und insbesondere keine sich überkreuzenden Verdrahtungen) von Zellpotentialen der Batterie verwendet werden müssen, um die gewünschte Gesamtspannung der Batterie zu erzeugen.

Stattdessen wird durch das erfindungsgemäße Konzept eine einfache und bzgl. der Herstellung schnelle und kostengünstige Kontaktierungsmöglichkeit geschaffen, indem jeweilige Kontaktfahnen im ersten Kontaktierungsabschnitt der Batterie mittels des mindestens einen Stackverbinders verbunden werden. Es sei allgemein darauf hingewiesen, dass die Anzahl von zwei Zellstacks der hier beschriebenen erfindungsgemäßen Batterie lediglich eine Mindestanzahl darstellt und dass die Batterie in Übereinstimmung mit obiger Beschreibung weitere Zellstacks umfassen kann.

Die Unteransprüche zeigen bevorzugte Weiterbildungen der Erfindung.

Eine Anzahl von Batteriezellen der Batterie innerhalb der ersten Anordnung von Batteriezellen und eine Anzahl von Batteriezellen innerhalb der zweiten Anordnung von Batteriezellen ist vorzugsweise identisch. Alternativ oder zusätzlich weisen die Ausrichtungen jeweiliger Pole der Batteriezellen innerhalb der ersten Anordnung und innerhalb der zweiten Anordnung wenigstens eine Abweichung zwischen der ersten Anordnung und der zweiten Anordnung auf. Mit anderen Worten, ist wenigstens eine Batteriezelle des einen Zellstacks bezüglich der Ausrichtung ihrer Pole um 180° gedreht zu einer Batteriezelle des jeweils anderen Zellstacks, welche sich innerhalb des zweiten Zellstacks an der gleichen Position befindet, wie die Batteriezelle innerhalb des ersten Zellstacks.

Besonders vorteilhaft weist die erfindungsgemäße Batterie sechs elektrisch miteinander verbundene Zellstacks auf, wobei jeder Zellstack über jeweils zehn Batteriezellen verfügt, welche bevorzugt jeweils in drei Ebenen in einer 3-4-3-Anordnung (welche besonders platzsparend ist) übereinander angeordnet sind, wobei jeweils sechs Batteriezellen innerhalb eines Zellstacks oder zellstackübergreifend parallel verschaltet sind, und wobei jeweilige parallel verschaltete Batteriezellen zur Erzeugung der Gesamtspannung der Batterie seriell verbunden sind. Aus diesem Grund wird eine solche Verschaltung von Batteriezellen der Batterie auch als "10s6p"-Anordnung bezeichnet, da jeweils sechs Batteriezellen parallel verschaltet sind und jeweils zehn solcher Parallelschaltungen seriell verschaltet sind.

In einer vorteilhaften Ausgestaltung der vorliegenden Erfindung weist die Batterie drei, vier, fünf oder mehr Zellstacks auf, welche bevorzugt jeweils zehn Batteriezellen umfassen.

Vorzugsweise ist der Stackverbinder ein Stanzgitter, insbesondere ein mit einem Kunststoffhalter verbundenes Stanzgitter. Der Kunststoffhalter erlaubt u. a. eine unbewegliche Anordnung mehrerer elektrisch getrennter Abschnitte des Stanzgitters. Eine Verbindung zwischen dem Stanzgitter und dem Kunststoffhalter kann beispielsweise mittels einer Klebeverbindung und/oder mittels eines Insert-Fertigungsverfahrens sichergestellt werden, durch welches der Kunststoffhalter und das Stanzgitter eine formschlüssige Verbindung ausbilden. Ein geeignetes Material für das Stanzgitter ist beispielsweise Kupfer oder ein davon abweichendes elektrisch leitendes Material. Alternativ zur Verwendung eines solchen Stanzgitters ist es auch möglich, eine mit Leiterbahnen versehene Leiterplatte einzusetzen. Ferner ist der Stackverbinder eingerichtet, Kontaktfahnen innerhalb eines Zellstacks und/oder Kontaktfahnen unterschiedlicher Zellstacks elektrisch miteinander zu verbinden. Im Falle einer Verwendung einer Mehrzahl von Stackverbindern innerhalb des ersten Kontaktierungsabschnittes der Batterie, ist es zudem denkbar, die jeweiligen Stackverbinder direkt miteinander zu verbinden und/oder über die Kontaktfahnen der Zellverbinder miteinander zu verbinden. Alternativ ist es auch möglich, die jeweiligen Stackverbinder mittels weiterer Verbindungselemente elektrisch miteinander zu verbinden.

Darüber hinaus ist es vorteilhaft, wenn zumindest ein Teil der Kontaktfahnen der Zellverbinder eingerichtet ist, derart auf eine Kontaktfahne eines jeweils benachbarten Zellstacks umgebogen zu werden, dass die beiden Kontaktfahnen überlappen. Hierfür ist es denkbar, dass derjenige Teil der Kontaktfahnen, welcher auf die jeweils benachbarten Kontaktfahnen umgebogen wird, eine größere Länge aufweist, als die jeweils benachbarten Kontaktfahnen. Dies schließt explizit nicht aus, dass sämtliche Kontaktfahnen über eine identische Länge verfügen. Darüber hinaus sind die Kontaktfahnen eingerichtet, elektrisch mit jeweils benachbarten Kontaktfahnen verbunden zu werden, wobei diese Verbindung insbesondere eine Schweiß- und/oder eine Lötverbindung ist. Ferner ist es auch möglich, jeweilige Kontaktfahnen mittels einer Schraub- und/oder Klemmverbindung und/oder einer davon abweichenden Verbindungsart elektrisch miteinander zu kontaktieren.

Besonders vorteilhaft ist die Batterie eingerichtet, über die Kontaktfahnen der Zellverbinder im zweiten Kontaktierungsabschnitt sämtliche vorhandenen Teilspannungen jeweiliger parallelgeschalteter Batteriezellen bereitzustellen. Dies bietet den Vorteil, dass beispielweise eine Überwachung sämtlicher Einzelpotentiale mittels des Zugriffs über die Kontaktfahnen im zweiten Kontaktierungsabschnitt ermöglicht wird. Eine solche Überwachung wird beispielsweise in einem Batteriemanagementsystem (BMS) der Batterie durchgeführt.

Vorzugsweise ist der oben beschriebene Stackverbinder ein erster Stackverbinder, während die Batterie zusätzlich einen zweiten Stackverbinder aufweist, der eingerichtet ist, jeweilige im zweiten Kontaktierungsabschnitt bereitgestellte Einzelpotentiale der Batterie an einem Signalanschluss der Batterie zusammenzuführen. Der Signalanschluss wird beispielsweise wie der Leistungsanschluss an einer der Stirnseiten, insbesondere an derselben Stirnseite angeordnet, an welcher sich der Leistungsanschluss befindet. Davon abweichende Anordnungspositionen des Signalanschlusses sind ebenfalls denkbar.

Bevorzugt ist der zweite Stackverbinder eine Leiterplatte und insbesondere eine flexible Leiterplatte (FCB). Dies ermöglicht eine besonders einfache Zusammenführung der jeweiligen Einzelpotentiale der Batterie über jeweilige Leiterbahnen der Leiterplatte am Signalanschluss der Batterie. Es sei darauf hingewiesen, dass der zweite Stackverbinder vorteilhaft ein einzelnes elektrisches Verbindungselement ist, dass dieser aber analog zum ersten Stackverbinder auch aus einer Mehrzahl einzelner zweiter Stackverbinder bestehen kann.

In einer vorteilhaften Ausgestaltung sind der erste Kontaktierungsabschnitt und der zweite Kontaktierungsabschnitt der Batterie auf jeweils gegenüberliegenden Seiten (z. B. auf einer Oberseite und einer Unterseite) der Batterie angeordnet.

Da die erfindungsgemäße Batterie insbesondere für einen Einsatz in elektrisch angetriebenen Zweirädern vorgesehen ist (ohne darauf eingeschränkt zu sein), wird mittels der erfindungsgemäßen Batterie vorzugsweise eine Gesamtspannung von 36 V und/oder 48 V bereitgestellt.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: ein Schaltbild repräsentierend eine Anordnung und eine Verschaltung von Batteriezellen einer erfindungsgemäßen Batterie in einer ersten Ausführungsform;
- Figur 2: eine beispielhafte Seitenansicht eines Zellstacks einer erfindungsgemäßen Batterie;
- Figur 3: eine schematische Ansicht von Zellverbindern für eine erfindungsgemäße Batterie in einer zweiten Ausführungsform;
- Figur 4: eine Draufsicht auf einen ersten Kontaktierungsabschnitt einer erfindungsgemäßen Batterie in einer dritten Ausführungsform; und
- Figur 5: eine Draufsicht auf einen zweiten Kontaktierungsabschnitt der erfindungsgemäßen Batterie in der dritten Ausführungsform.

### Ausführungsformen der Erfindung

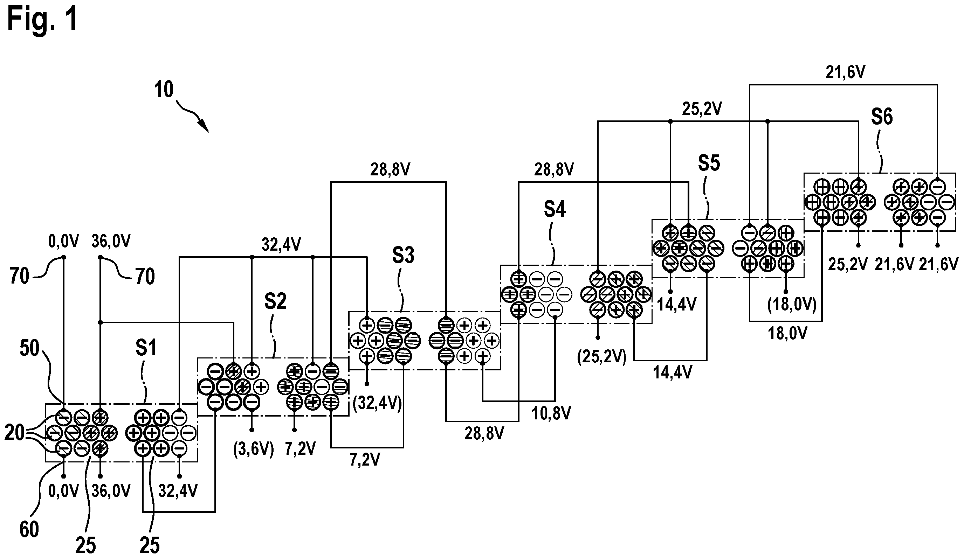

Figur 1 zeigt ein Schaltbild repräsentierend eine Anordnung und eine Verschaltung von Batteriezellen 20 einer erfindungsgemäßen Batterie 10 in einer ersten Ausführungsform. Die hier dargestellte Ausführungsform repräsentiert eine 10s6p-Anordung der jeweiligen Batteriezellen 20, welche sechs Zellstacks S1, S2, S3, S4, S5, S6 umfasst. In jedem Zellstack S1, S2, S3, S4, S5, S6 sind jeweils zehn Batteriezellen 20 parallel zueinander in Form einer 3-4-3 Stapelung angeordnet. Die jeweils in linken und rechten Bereichen der jeweiligen Zellstacks S1, S2, S3, S4, S5, S6 dargestellten Batteriepole entsprechen jeweils gegenüberliegenden elektrischen Kontaktierungsbereichen 25 der jeweiligen Batteriezellen 20. Jeweilige parallele und/oder serielle elektrische Verbindungen der Kontaktierungsbereiche (Pole) 25 der Batteriezellen 20 sind mittels jeweiliger (nicht gezeigter) Zellverbinder 30 realisiert. Zu erkennen sind zudem die erfindungsgemäßen unterschiedlichen Gruppierungen und/oder Ausrichtungen der Batteriezellen 20 innerhalb der jeweiligen Zellstacks S1, S2, S3, S4, S5, S6. Beispielsweise ist die Gruppe aus vier parallel verschalteten Pluspolen im Zellstack S1 mit einer Gruppe aus zwei parallel verschalteten Pluspolen im Zellstack S2 elektrisch verbunden, um eine Parallelschaltung von insgesamt sechs Batteriezellen 20 herzustellen. Die hier als Oberseite der Batterie 10 dargestellte Seite der jeweiligen Zellstacks S1, S2, S3, S4, S5, S6 repräsentiert diejenige Seite, auf welcher der erste Kontaktierungsabschnitt 50 angeordnet ist, in welchem jeweilige Kontaktfahnen 35 der jeweiligen Zellverbinder 30 von außen (d. h. außerhalb der jeweiligen Zellstacks S1, S2, S3, S4, S5, S6) zugänglich angeordnet sind. An einem Leistungsanschluss 70 wird die Gesamtspannung der Batterie 10 bereitgestellt, indem die einzelnen Zellstacks S1, S2, S3, S4, S5, S6 mittels eines ersten Stackverbinders, welcher hier aus einem aus Kupfer hergestellten Stanzgitter besteht, untereinander kontaktiert sind. Die hier als Unterseite dargestellte Seite der Zellstacks S1, S2, S3, S4, S5, S6 repräsentiert diejenige Seite, auf welcher der zweite Kontaktierungsabschnitt 60 angeordnet ist, in welchem durch die Kontaktfahnen 35 der jeweiligen Zellverbinder 30 die jeweiligen Einzelpotentiale der Batterie 10 bereitgestellt werden (durch jeweilige Spannungswerte gekennzeichnet). Jeweilige Einzelpotentiale der Batterie 10 werden mittels eines zweiten Stackverbinders, welcher hier als flexible Leiterplatte ausgebildet ist, an einem Signalanschluss der Batterie 10 zusammengeführt. Durch die gezeigte Aufteilung und Verschaltung der Batteriezellen 20, lässt sich somit der erfindungsgemäße Vorteil einer vereinfachten Kontaktierung der jeweiligen Batteriezellen 20 bzw. Zellstacks S1, S2, S3, S4, S5, S6 mittels des ersten Stackverbinders und des zweiten Stackverbinders erreichen.

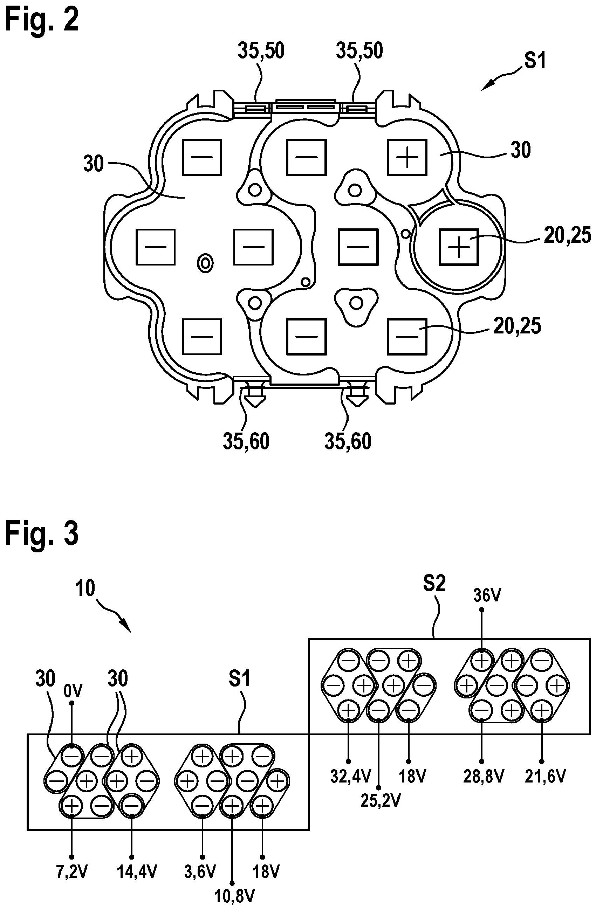

Figur 2 zeigt eine beispielhafte Seitenansicht eines Zellstacks S1 einer erfindungsgemäßen Batterie 10. Die Seitenansicht repräsentiert eine der Kontaktierungsseiten des Zellstacks S1, welcher zehn Batteriezellen 20 aufweist. Dargestellt sind jeweilige Zellverbinder 30, welche jeweilige Kontaktierungsbereiche 25 der Batteriezellen 20 seriell und/oder parallel miteinander verbinden. Jeweilige durch die Zellverbinder 30 bereitgestellten Kontaktfahnen 35 werden im ersten Kontaktierungsabschnitt 50 und im zweiten Kontaktierungsabschnitt 60 der Batterie 10 von außen zugänglich bereitgestellt, so dass auf jeweilige Einzelpotentiale der Batterie 10 an einer Außenseite des Zellstacks S1 zugegriffen werden kann.

Figur 3 zeigt eine schematische Ansicht von Zellverbindern 20 für eine erfindungsgemäße Batterie 10 in einer zweiten Ausführungsform. In dieser Ausführungsform umfasst die Batterie 10 zwei Zellstacks S1, S2, welche jeweils zehn Batteriezellen 20 umfassen. Eine elektrische Kontaktierung jeweiliger Batteriezellen 20 innerhalb der beiden Zellstacks S1, S2 erfolgt durch die oben beschriebenen Zellverbinder 30, welche hier mittels einer Umrandung jeweils zu verbindender Batteriezellen 20 schematisch gekennzeichnet sind.

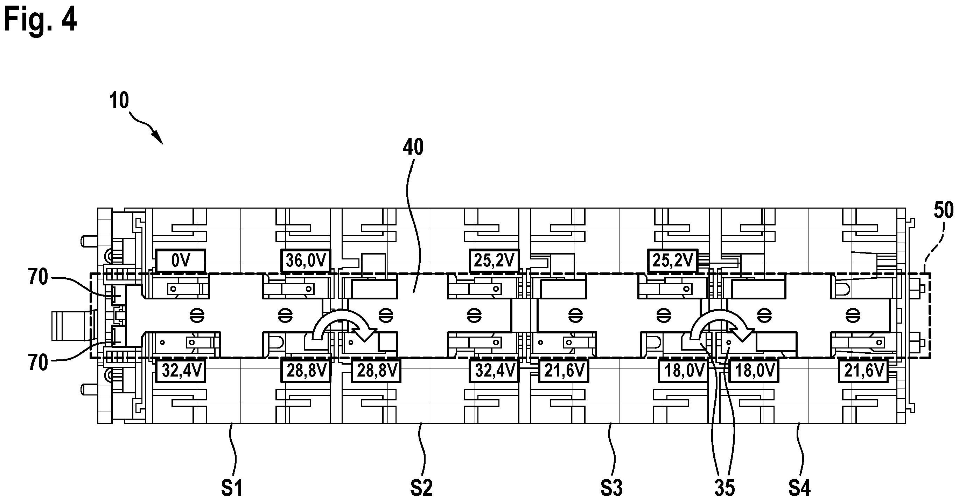

Figur 4 zeigt eine Draufsicht auf einen ersten Kontaktierungsabschnitt 50 einer erfindungsgemäßen Batterie 10 in einer dritten Ausführungsform. Im ersten Kontaktierungsabschnitt 50 ist ein erster Stackverbinder 40 dargestellt, welcher die einzelnen (nicht gezeigten) Zellverbinder 30 der Zellstacks S1, S2, S3, S4 der Batterie 10 derart elektrisch miteinander verbindet, dass an einem Leistungsanschluss 70 eine Gesamtspannung der Batterie 10 bereitgestellt wird. Der erste Stackverbinder 40 ist in Form eines aus Kupfer hergestellten Stanzgitters ausgebildet, welches in einen Kunststoffhalter integriert ist. Der erste Stackverbinder 40 ist mittels Schweißverbindungen mit einem Teil der Kontaktfahnen 35 der jeweiligen Zellstacks S1, S2, S3 S4 elektrisch verbunden. Zusätzliche erforderliche elektrische Verbindungen zwischen den Zellstacks S1 und S2 bzw. zwischen den Zellstacks S3 und S4, werden durch eine direkte Kontaktierung von Kontaktfahnen 35 hergestellt, indem jeweilige hierfür vorgesehene Kontaktfahnen 35 benachbarter Zellstacks S1, S2, S3, S4 in Pfeilrichtung aufeinander umgebogen und anschließend miteinander verschweißt werden. Dargestellt sind zudem die in dieser Anordnung von Batteriezellen 20 im ersten Kontaktierungsabschnitt 50 verfügbaren Spannungen der Batterie 10.

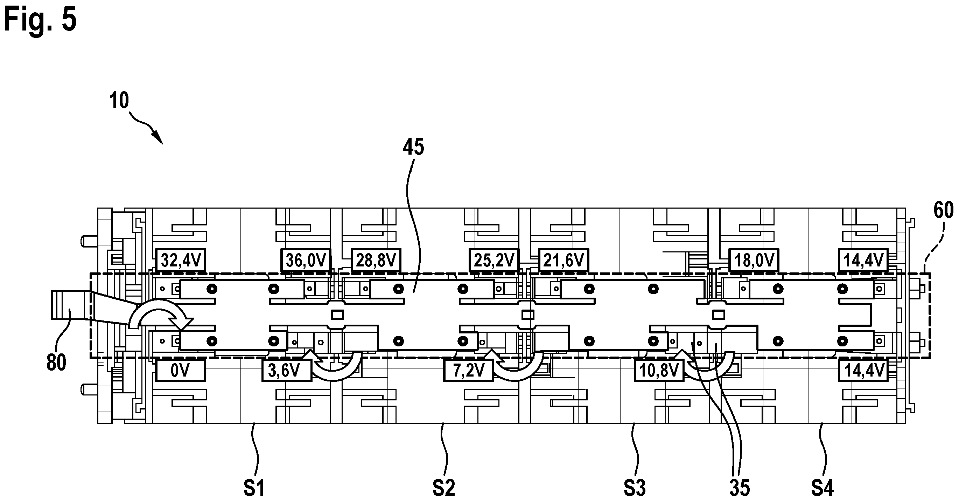

Figur 5 zeigt eine Draufsicht auf einen zweiten Kontaktierungsabschnitt 60 der erfindungsgemäßen Batterie 10 in der dritten Ausführungsform. Der zweite Kontaktierungsabschnitt 60 liegt hier auf der gegenüberliegenden Seite der Batterie 60, welche in Figur 4 beschrieben ist. Dargestellt sind die jeweiligen Kontaktfahnen 35 der Zellverbinder 30, welche im zweiten Kontaktierungsabschnitt 60 der Batterie 10 bereitgestellt sind. Mittels eines zweiten Stackverbinders 45, der hier als flexible Leiterplatte ausgebildet ist, werden sämtliche bereitgestellten Einzelpotentiale der Batterie 10 an einem Signalanschluss 80 der Batterie zusammengeführt, so dass eine Überwachung der Einzelpotentiale der Batterie 10 ermöglicht wird. Auch im zweiten Kontaktierungsabschnitt 60 der Batterie 10 werden einige der Kontaktfahnen 35 durch Umbiegen und Verschweißen direkt kontaktiert (jeweils in Pfeilrichtung).

## Patentansprüche

1. Batterie (10) umfassend:
• einen ersten Zellstack (S1) umfassend eine erste Anordnung von Batteriezellen (20),
• einen zweiten Zellstack (S2) umfassend eine zweite Anordnung von Batteriezellen (20),
• eine Mehrzahl elektrisch leitender Zellverbinder (30), und
• mindestens einen elektrisch leitenden Stackverbinder (40),
wobei
• die Batteriezellen (20) innerhalb der jeweiligen Zellstacks (S1, S2) bezüglich ihrer jeweiligen Längserstreckungsrichtung parallel zueinander angeordnet sind, so dass jeweilige einander gegenüberliegende elektrische Kontaktierungsbereiche (25) der Batteriezellen (20) an einer ersten Kontaktierungsseite und an einer zweiten Kontaktierungsseite der jeweiligen Zellstacks (S1, S2) bereitgestellt werden,
• der erste Zellstack (S1) und der zweite Zellstack (S2) derart unbeweglich miteinander verbunden sind, dass eine der Kontaktierungsseiten des ersten Zellstacks (S1) einer der Kontaktierungsseiten des zweiten Zellstacks (S2) zugewandt ist, wobei jeweilige einander zugewandte Kontaktierungsbereiche (25) der Batteriezellen (20) der jeweiligen Zellstacks (S1, S2) voneinander beabstandet sind,
• die Zellverbinder (30) an den jeweiligen Kontaktierungsseiten der Zellstacks (S1, S2) angeordnet sind und jeweils wenigstens zwei Batteriezellen (20) pro Kontaktierungsseite elektrisch miteinander verbinden und diese elektrische Verbindung mittels jeweiliger Kontaktfahnen (35) in einem ersten Kontaktierungsabschnitt (50) der Batterie (10) und/oder in einem vom ersten Kontaktierungsabschnitt (50) abweichenden zweiten Kontaktierungsabschnitt (60) der Batterie (10) bereitstellen,
• der mindestens eine Stackverbinder (40) einlagig ausgebildet ist und eingerichtet ist, durch die Kontaktfahnen (35) im ersten Kontaktierungsabschnitt (50) bereitgestellte Spannungen elektrisch verbundener Batteriezellen (20) an einem Leistungsanschluss (70) der Batterie (10) zu einer Gesamtspannung der Batterie (10) zusammenzuführen, und
• zum Bereitstellen der Gesamtspannung im ersten Kontaktierungsabschnitt (50) wenigstens zwei benachbarte Kontaktfahnen (35) des ersten Zellstacks (S1) und des zweiten Zellstacks (S2) im zweiten Kontaktierungsabschnitt (60) elektrisch miteinander verbunden sind.

2. Batterie (10) nach Anspruch 1, wobei
• eine Anzahl von Batteriezellen (20) innerhalb der ersten Anordnung von Batteriezellen (20) und eine Anzahl von Batteriezellen (20) innerhalb der zweiten Anordnung von Batteriezellen (20) identisch ist, und/oder
• die Ausrichtungen jeweiliger Pole der Batteriezellen (20) innerhalb der ersten Anordnung und innerhalb der zweiten Anordnung wenigstens eine Abweichung zwischen der ersten Anordnung und der zweiten Anordnung aufweisen.

3. Batterie (10) nach einem der vorstehenden Ansprüche, wobei
• die Batterie (10) sechs elektrisch miteinander verbundene Zellstacks (S1, S2, S3, S4, S5, S6) aufweist,
• jeder Zellstack (S1, S2, S3, S4, S5, S6) über jeweils zehn Batteriezellen (20) verfügt, welche bevorzugt jeweils in drei Ebenen in einer 3-4-3-Anordnung übereinander angeordnet sind,
• jeweils sechs Batteriezellen (20) innerhalb eines Zellstacks (S1, S2, S3, S4, S5, S6) oder zellstackübergreifend parallel verschaltet sind, und
• jeweilige parallel verschaltete Batteriezellen (20) zur Erzeugung der Gesamtspannung der Batterie (10) seriell verbunden sind.

4. Batterie (10) nach einem der vorstehenden Ansprüche, wobei die Batterie (10) drei, vier, fünf oder mehr Zellstacks (S1, S2, S3, S4, S5) aufweist, welche bevorzugt jeweils zehn Batteriezellen (20) umfassen.

5. Batterie (10) nach einem der vorstehenden Ansprüche, wobei der Stackverbinder (40)
• ein Stanzgitter, insbesondere ein mit einem Kunststoffhalter verbundenes Stanzgitter, oder
• eine einlagige Leiterplatte
ist und eingerichtet ist,
• Kontaktfahnen (35) innerhalb eines Zellstacks (S1, S2) und/oder Kontaktfahnen unterschiedlicher Zellstacks (S1, S2) elektrisch miteinander zu verbinden.

6. Batterie (10) nach einem der vorstehenden Ansprüche, wobei zumindest ein Teil der Kontaktfahnen (35) der Zellverbinder (30) eingerichtet ist,
• derart auf eine Kontaktfahne (35) eines jeweils benachbarten Zellstacks (S1, S2) umgebogen zu werden, dass die beiden Kontaktfahnen (35) überlappen, und
• elektrisch mit der benachbarten Kontaktfahne (35) verbunden zu werden, wobei diese Verbindung insbesondere eine Schweiß- und/oder eine Lötverbindung ist.

7. Batterie (10) nach einem der vorstehenden Ansprüche, wobei die Batterie (10) eingerichtet ist, über die Kontaktfahnen (35) der Zellverbinder (30) im zweiten Kontaktierungsabschnitt (60) sämtliche vorhandenen Einzelpotentiale jeweiliger parallelgeschalteter Batteriezellen (20) bereitzustellen.

8. Batterie (10) nach einem der vorstehenden Ansprüche, wobei
• der Stackverbinder ein erster Stackverbinder (40) ist, und
• die Batterie (10) einen zweiten Stackverbinder (45) aufweist, welcher eingerichtet ist, jeweilige im zweiten Kontaktierungsabschnitt (60) bereitgestellte Einzelpotentiale der Batterie (10) an einem Signalanschluss (80) der Batterie (10) zusammenzuführen.

9. Batterie (10) nach Anspruch 8, wobei der zweite Stackverbinder (45) eine Leiterplatte, insbesondere eine flexible Leiterplatte ist.

10. Batterie (10) nach einem der vorstehenden Ansprüche, wobei der erste Kontaktierungsabschnitt (50) und der zweite Kontaktierungsabschnitt (60) auf jeweils gegenüberliegenden Seiten der Batterie (10) angeordnet sind.

11. Batterie (10) nach einem der vorstehenden Ansprüche, wobei die Batterie (10) eingerichtet ist, eine Gesamtspannung von 36 V oder 48 V bereitzustellen.
